# EUROPÄISCHE PATENTSCHRIFT

(11) **EP 2 397 704 B1**
(45) Veröffentlichungstag und Bekanntmachung des Hinweises auf die Patenterteilung: **09.11.2016**
(21) Anmeldenummer: 11007399.6
(22) Anmeldetag: 14.09.2007
(51) Int. Cl.: F16B 5/00, B23K 26/20, B23K 33/00, B60N 2/225, F16B 5/08

(54) **Neigunsversteller für Fahrzeugsitze**
Inclination adjuster for a vehicle seat
Dispositif de réglage de l'inclinaison pour un siège de véhicule automobile

(30) Priorität: 27.10.2006 DE 102006051403
(43) Veröffentlichungstag der Anmeldung: 21.12.2011
(62) Teilanmeldung aus: 07818157.5
(73) Patentinhaber: Johnson Controls GmbH, 51399 Burscheid (DE)
(72) Erfinder: Albert, Reginold Kirubaharan, 51399 Burscheid (DE); Kienke, Ingo, 42929 Wermelskirchen (DE); Otto, Jürgen, 51399 Burscheid (DE); Budweg, Mario, 42499 Hückeswagen (DE)
(74) Vertreter: Liedhegener, Ralf

(56) Entgegenhaltungen:
- EP-A- 1 408 242
- WO-A-93/01418
- WO-A-2006/040276
- WO-A-2006/040303
- DE-A1- 3 705 116
- DE-A1-102005 001 606
- FR-A- 2 712 045
- US-A1- 2015 209 909

## Beschreibung

Die Erfindung betrifft einen Neigungsversteller für einen Fahrzeugsitz gemäß dem Oberbegriff des Anspruchs 1, mit mindestens drei, vorzugsweise mindestens vier miteinander verbundenen, plattenförmigen Elementen, welche zueinander zumindest näherungsweise parallel ausgerichtet sind, wobei jeweils Elementpaare aus zumindest partiell aneinander liegenden Elementen im Bereich lhrer Anlage unmittelbar miteinander verbunden, insbesondere verschweißt sind.

### Stand der Technik

Aus der internationalen Patentanmeldung WO 2006/040276 A1 ist eine erfindungsgemäße Komponente für einen Fahrzeugsitz bekannt. Sie besteht aus einer Schichtung von einander flächig berührenden, etwa gleich dicken Blechplatten, wobei jede Blechplatte mit der unmittelbar darunter liegenden Blechplatte unter Bildung eines Plattenpaares durch Laserschweißung verbunden ist. Während die oberste Blechplatte für den von oben einwirkenden Laserstrahl naturgemäß problemlos zugänglich ist, erfolgt die Verschweißung der tiefer liegenden Plattenpaare jeweils im Bereich von Ausnehmungen in den darüber liegenden Blechplatten, durch welche hindurch der Laserstahl seinen Wirkort erreicht.

Bei kleinteiligen, komplex aufgebauten Komponenten, beispielsweise Lehnenneigungsverstellem von Fahrzeugsitzen, reicht der vorhandene Bauraum zum Einbringen einer Vielzahl derartiger Ausnehmungen gegebenenfalls nicht aus.

Natürlich ist es denkbar, eine geschichtete Komponente auch dadurch zu fertigen, dass zwei Blechplatten aufeinander gelegt und verschweißt werden, nachfolgend eine weitere Blechplatte auf dieses Plattenpaar aufgelegt und mit der darunter liegenden Blechplatte verschweißt wird, und dieser Vorgang bis zum Erreichen der gewünschten Schichtungshöhe wiederholt wird. Im Bereich der Schweißung entsteht jedoch in der Regel ein Schweißwulst, der das Auflegen der nächsten Blechplatte stört und daher zuvor aufwändig entfernt werden muss.

Aus der Patentanmeldung DE 10 2005 001 606 ist bekannt, drei aufeinander liegende Blechplatten unterschiedlicher Dicke in einem Zug mittels Laserschweißung zu verbinden. Dieses Vorgehen erfordert jedoch eine spezielle Reihenfolge der Blechplatten derart, dass der Laserstrahl auf die dünnste Blechplatte auftritt und diese durch die mittlere Blechplatte hindurch mit der dicksten Blechplatte verschweißt. Darüber hinaus ist die Präzision bei beim Verschweißen von zwei Blechplatten wegen des geringeren Wärmeeintrags und entsprechend reduziertem Verzug grundsätzlich besser als beim Verbinden von drei Blechplatten mittels einer einzigen Schweißnaht.

Aus der den Oberbegriff des Anspruchs 1 beschreibenden DE 37 05 116 ist ein Drehgelenk für einen Sitz mit verstellbarer Rückenlehne bekannt, bei dem zwei gegeneinander bewegbare Gelenkteile über eine Schwenkachse miteinander verbunden sind und eine die Lage der Gelenkteile zueinander bestimmende, als Getriebe ausgebildete Ver- und Feststelleinrichtung vorgesehen ist, die einen auf der Schwenkachse angeordneten Exzenter aufweist, auf dem eines der beiden Gelenkteile mit einem zugehörigen Getrieberad gelagert ist, und die Schwenkachse einen weiteren Exzenterabschnitt aufweist, auf dem ein den auf dem Exzenter gelagerten Gelenkteil durch Axialbewegung radial anstellendes Stützglied angeordnet ist, wobei außer dem Exzenter auch der weitere Exzenterabschnitt der Schwenkachse zylindrisch ausgebildet ist und das diesen ringförmig umgebende, in axialer Richtung abgefederte Stützglied Segmente aufweist, die in ihrer stützfreien Lage über einen Anschlag in einer Minimalschrägstellung gehaltert sind.

### Aufgabe

Der Erfindung liegt die Aufgabe zugrunde, einen in Form eines Taumelgetriebes ausgebildeten Neigungsversteller mit einer besonders günstigen Kraftübertragung zur Verfügung zu stellen. Insbesondere sollen Reibungskräfte beim Verstellen des Taumelgetriebes unter normalen Lastverhältnissen verringert werden. Insbesondere solle ein unkontrolliertes Auseinanderspreizen von Beschlagplatten des Neigungsverstellers verhindert werden.

### Lösung

Die Aufgabe wird gemäß Anspruch 1 erfindungsgemäß dadurch gelöst, dass das Taumelgetriebe gegenüber einer Mittelebene im Wesentlichen symmetrisch ausgebildet ist und die Beschlagplatten gegenüber den Zahnrädern um einen Versatz derart nach innen versetzt angeordnet sind, dass sie bei einer Belastung im Bereich der Verzahnung eine Verformung in Richtung der Mittelebene erfahren. Der Versatz führt bei einer Belastung des Taumelgetriebes dazu, dass sich die Beschlagplatten mit ihren verzahnten Enden nach innen in Richtung des Beschlagteils verformen, bis sie insbesondere an dem Beschlagteil anliegen. Dadurch ist ein Neigungsversteller mit einer besonders günstigen Kraftübertragung zur Verfügung gestellt. Insbesondere sind Reibungskräfte beim Verstellen des Taumelgetriebes unter normalen Lastverhältnissen verringert und ein unkontrolliertes Auseinanderspreizen von Beschlagplatten des Neigungsverstellers ist verhindert.

Nach einer besonderen Ausbildung der Erfindung sind die beiden äußeren Elementpaare zueinander spiegelbildlich ausgebildet, wobei die Spiegelebene im Verbindungsbereich des mittleren Elementpaares verläuft.

Vorzugsweise ist die Verbindung zwischen den partiell aneinander liegenden Elementen als Laserschweißung ausgebildet.

### Figuren

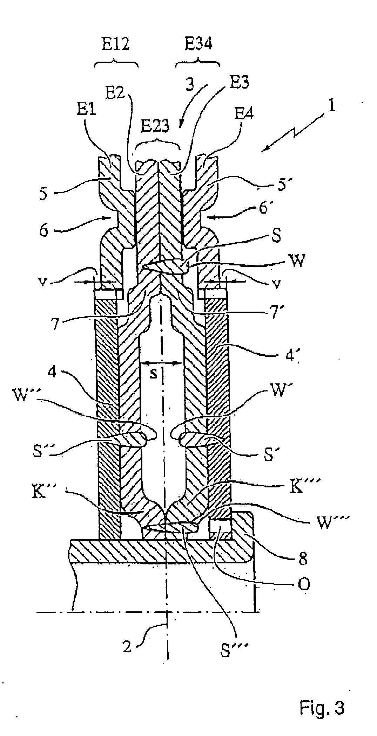

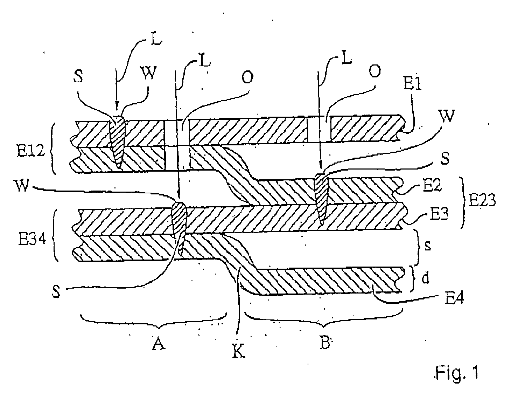

Ein erfindungsgemäßer Neigungsversteller ist in Figur 3 dargestellt.

Es zeigen:
Fig. 1 eine Komponente
Fig. 2 ein erstes auszugsweise gezeigtes, erfindungsgemäß gestaltetes Taumelgetriebe,
Fig. 3 ein auszugsweise dargestellter Neigungsversteller nach der Erfindung.

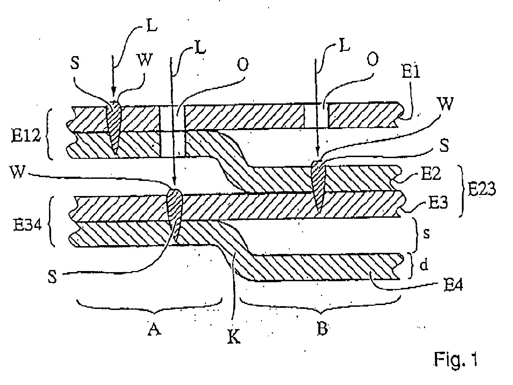

Die in Fig. 1 gezeigte Komponente besteht aus vier plattenförmigen, zueinander im Wesentlichen parallel verlaufenden Elementen E1, E2, E3 und E4 aus Stahlblech, von denen jeweils benachbarte Elemente E1, E2 und E2, E3 sowie E3, E4 insgesamt drei Elementpaare E21, E23 und E34 ausbilden. Die Dicke d ist im Ausführungsbeispiel für alle Elemente E1 bis E4 gleich.

Jedes Elementpaar E12, E23, E34 weist einen ersten Bereich (am Elementpaar E34 mit A bezeichnet) auf, In welchem die betreffenden Elemente (z. B. E3, E4) unmittelbar aneinander anliegen und durch eine Schweißnaht S miteinander verbunden sind. Die Schweißverbindung aller Elementpaare E12, E23, E34 erfolgt mittels Laserstrahl L von einer Seite der Komponente her (in Fig. 1 von ihrer Oberseite), wobei Öffnungen O in den oberen Elementpaaren E12 und E23 den Durchtritt der Laserstrahlen L zu den darunter liegenden Elementpaaren E23 und E34 ermöglichen.

Zumindest ein Element E1 bis E4 jedes Elementpaares E12, E23, E34 ist ferner mit einer Kröpfung (am Elementpaar E34 mit K bezeichnet) versehen, also einem Bereich, in welchem das plattenförmige Element (hier E4) um einen ersten Winkel (im Ausführungsbeispiel 90°) vom benachbarten Element (hier E3) weg gebogen und dann wieder in Gegenrichtung um einen im Wesentlichen gleichen Winkel zurück gebogen wird. Jenseits der Kröpfung K entsteht somit in jedem Elementpaar E12, E23, E34 ein Bereich, in welchem die ein Elementpaar E12, E23, E34 bildenden Elemente E1 und E2, E2 und E3 sowie E3 und E4 zueinander spaltartig beabstandet sind. Am Elementpaar E34 ist dieser Bereich mit B mit dem zugehörigen Spaltmaß s bezeichnet.

Durch diese Ausbildung wird bewirkt, dass die Schweißwülste W der Schweißnähte S eines Elementpaares (z. B. E34) ein benachbartes Elementpaar (hier E23) nicht stören, da sich der betreffende Schweißwulst W in den Spalt im Bereich B hinein entwickelt. Im Ausführungsbeispiel nach Fig. 1 schaffen darüber hinaus bei entsprechend großer Ausbildung auch die Öffnungen O den nötigen Freiraum. Dennoch ist der Spalt hilfreich, Verzug in den oberhalb der Schweißnaht liegenden Elementen zu verhindern. Ferner kann die Dicke des geschweißten Verbundes durch kompensierend ausgeführte Kröpfungen K auch bei Dickentoleranzen der einzelnen Elemente sehr genau eingestellt werden.

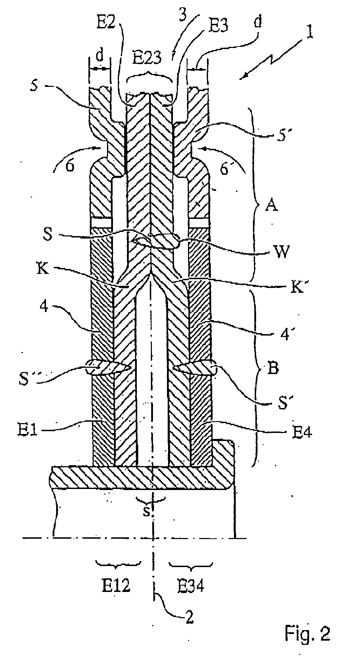

Bei dem in Fig. 2 dargestellten, sehr vereinfacht unter Fortfall zahlrelcher Bauteile gezeichneten Taumelgetriebe 1 können Öffnungen O wegen des sehr komplexen Aufbaus nicht vorgesehen werden, so dass dem Bereich B eine besonders wichtige Bedeutung zukommt. Hinsichtlich des Aufbaus und der Funktion derartiger Neigungsversteller wird ausdrücklich auf die Druckschrift WO 2006/040303 A2 verwiesen.

Das zur Verstellung der Lehnenneigung vorgesehene, zu einer Mittelebene 2 näherungsweise spiegelbildlich ausgeführte Taumelgetriebe 1 besteht aus einem ersten Beschlagteil 3, welches beispielsweise starr mit dem Sitzteil des betreffenden Sitzes verbunden ist. Das Beschlagteil 3 umfasst ein mittleres Elementpaar E23, das jeweils einen Bereich A unmittelbarer Anlage aneinander sowie einen Bereich B mit einem Abstand (Spaltmaß s) zueinander aufweist. Zwischen den Bereichen A, B sind beide Elemente E2,

E3 des Elementpaares E23 jeweils mit voneinander weg weisenden Kröpfungen K, K' versehen. Die Elemente E2 und E3 sind im Bereich A der unmittelbaren Anlage durch eine Schweißnaht S mit einem Schweißwulst W miteinander verbunden.

Auf das Elementpaar E23 sind von außen unter Ausbildung der Element-paare E12 und E34 weitere plattenförmigen Elemente E1 und E4 aufgesetzt, welche als außenverzahnte Zahnräder 4, 4' gestalten sind. Die Elementpaare E12 und E34 sind gleichfalls durch Schweißnähte S', S" gefügt.

Bei der Fertigung des Beschlagteils 3 werden zunächst die Elemente E2 und E3 miteinander verschweißt. Anschließend werden die äußeren Elemente E1 und E4 auf diesen Verbund aufgesetzt und mit dem Elementpaar E23 verbunden.

Durch die Kröpfungen K, K' sind die Zahnräder 4, 4' im Bereich der Schweißnaht S des zentralen Elementpaares E23 zu den Elementen E2 und E3 beabstandet, so dass der Schweißwulst W deren Aufsetzen nicht stört und daher nicht zuvor entfernt werden muss.

Die außenverzahnten Zahnräder 4, 4' befinden sich in Eingriff mit Beschlagplatten 5, 5', welche als lehnenfeste Bauteile mit einer Innenverzahnung ausgestattet sind. Die Innenverzahnung weist jeweils zumindest einen Zahn mehr auf als die Außenverzahnung der Zahnräder 4, 4', mit welcher sie sich in Eingriff befindet. Die Zahnräder 4,4' können sich hierdurch bei einer Betätigung des Taumelgetriebes 1 auf dem Innenumfang der Beschlagplatten 5, 5' abwälzen.

Die Verzahnungen der Zahnräder 4,4' und der Beschlagplatten 5, 5', welche aus Halbzeugen gleicher Dicke d gestanzt sind, befinden sich dabei bezogen auf ihre Dicke d stets fluchtend in voller Überdeckung, so dass in unbelastetem Zustand der gesamte Materialquerschnitt zur Kraftübertragung genutzt wird. Jenseits der Innenverzahnung an den Beschlagplatten 5, 5' in Richtung des Beschlagteils 3 weisende Vorwölbungen 6, 6' dienen dabei der axialen Führung. Alternativ ist denkbar, Distanzstücke seitlich auf das Beschlagteil 3 aufzusetzen.

Bei der Ausbildung nach Fig. 3 sind die Beschlagplatten 5, 5' gegenüber den im Ausführungsbeispiel gleich, gegebenenfalls aber auch unterschiedlich dicken Zahnrädern 4,4' geringfügig, beispielsweise 1/5 bis 1/10 ihrer Dicke d, in Richtung der Mittelebene 2 nach innen versetzt (Versatz v), so dass keine volle Überdeckung im Bereich der Verzahnung gegeben ist. Die Reibungskräfte beim Verstellen des Taumelgetriebes 1 unter normalen Lastverhältnissen werden hierdurch verringert. Bei einer Belastung des Taumelgetriebes 1 führt dieser Versatz v dazu, dass sich die Beschlagplatten 5, 5' mit ihren verzahnten Enden nach innen in Richtung des Beschlagteils 3 verformen, bis sie an den Vorwölbungen 6, 6' und/oder zusätzlichen Abkantungen 7, 7' des Beschlagteils 3 anliegen. Ein unkontrolliertes Auseinanderspreizen der Beschlagplatten 5, 5' wird hierdurch verhindert.

Der Neigungsversteller in Form eines Taumelgetriebes nach Fig. 3 wird in einer geänderten Reihenfolge geschweißt. Zunächst erfolgt von den noch getrennten inneren Platten des Beschlagteils 3 (Elemente E2, E3) her deren Verbund mit den Beschlag-platten 5, 5' unter Ausbildung der Elementpaare E12 und E34 (Schweißnähte S' und S"). Anschließend werden die Elementpaare E12 und E34 aufeinander gelegt und außerhalb der Beschlagplatten 5, 5' im Bereich der Elemente E2 und E3 mit der Schweißnaht S verbunden. Die Schweißwülste W' und W" weisen somit in den Abstand s des Beschlagteils 3 hinein. Eine weitere Schweißnaht S'" verbindet die Elemente E2, E3 im Bereich der späteren Anlage an die Lagerhülse 8, wo sie mittels weiterer Kröpfungen K", K'" aneinander liegen. Der Laserstrahl L wird hierzu durch eine kleine Öffnung 0 in der Beschlagplatte 5' geführt.

Die Beschlagplatte 3 erhält hierdurch eine höhere axiale Steifigkeit und eine verbesserte Anlage an die Lagerhülse 8.

### Bezugszeichen

- d: Dicke
- E1, E2, E3, E4: Elemente
- E12, E23, E34: Elementpaar
- K, K', K", K"': Kröpfung
- L: Laserstrahl
- O: Öffnung
- s: Spaltmaß
- S, S', S", S"': Schweißnaht
- v: Versatz
- W, W', W", W"': Schweißwulst
- 1: Taumelgetriebe
- 2: Mittelebene
- 3: Beschlagteil
- 4, 4': Zahnrad
- 5, 5': Beschlagplatte
- 6, 6': Vorwölbungen
- 7, 7': Abkantung
- 8: Lagerhülse

## Patentansprüche

1. Neigungsversteller für Fahrzeugsitze in Form eines Taumelgetriebes (1), welcher ein erstes Beschlagteil (3) und ein gegenüber dem ersten Beschlagteil (3) winkeleinstellbares zweites Beschlagteil aufweist, sowie mindestens ein außenverzahntes Zahnrad (4, 4') und mindestens eine innenverzahnte Beschlagplatte (5, 5'), wobei die jeweils miteinander in Eingriff befindlichen Verzahnungen von Zahnrad (4, 4') und Beschlagplatte (5, 5') zueinander axial versetzt ausgerichtet sind, **dadurch gekennzeichnet**, dassdas Taumelgetriebe (1) gegenüber einer Mittelebene (2) im Wesentlichen symmetrisch ausgebildet ist und die Beschlagplatten (5, 5') gegenüber den Zahnrädern (4, 4') um einen Versatz (v) derart nach innen versetzt angeordnet sind, dass sie bei einer Belastung im Bereich der Verzahnung eine Verformung in Richtung der Mittelebene (2) erfahren.

2. Neigungsversteller nach Anspruch 1, mit mindestens vier miteinander verbundenen, plattenförmigen Elementen (E1, E2, E3, E4), welche zueinander zumindest näherungsweise parallel ausgerichtet sind, wobei jeweils Elementpaare (E12, E23, E34) aus zumindest partiell aneinander liegenden Elementen im Bereich ihrer Anlage unmittelbar miteinander verbunden, insbesondere verschweißt sind, wobei jeweils wenigstens ein Element jedes Elementpaares eine einen örtlichen, spaltartigen Abstand (Spaltmaß s) zum anderen Element des gleichen Elementpaares schaffende Kröpfung (K, K') aufweist und die Verbindung zum nächsten Element unter Bildung eines weiteren Elementpaares im Bereich dieses Abstands erfolgt.

3. Neigungsversteller nach Anspruch 2, **dadurch gekennzeichnet, dass** die beiden äußeren Elementpaare (E12, E34) zueinander spiegelbildlich ausgebildet sind und die Spiegelebene (Mittelebene 2) im Verbindungs-bereich des mittleren Elementpaares (E23) verläuft.

4. Neigungsversteller nach Anspruch 2 oder 3, **dadurch gekennzeichnet, dass** die Verbindung zwischen den partiell aneinander liegenden Elementen (E1 bis E4) als Laserschweißung ausgebildet ist.

5. Neigungsversteller nach Anspruch 3 oder 4, **dadurch gekennzeichnet, dass** das mittlere Elementpaar (E23) das erste Beschlagteil (3) ausbildet, mit welchem mit Verzahnungen versehene äußere Elemente (E1, E4) verbunden sind.

6. Neigungsversteller nach Anspruch 5, **dadurch gekennzeichnet, dass** die äußeren Elemente (E1, E4) als mit Außenverzahnung versehene Zahnräder (4, 4') ausgebildet sind, welche jeweils mit einer mit einer Innenverzahnung versehenen Beschlagplatte (5, 5') des zweiten Beschlagteils in Eingriff bringbar sind.

## Claims

1. Inclination adjuster for vehicle seats in the form of a wobble mechanism (1), which adjuster has a first fitting part (3) and a second fitting part which is angularly adjustable with respect to the first fitting part (3), and also at least one externally toothed wheel (4, 4') and at least one internally toothed fitting plate (5, 5'), wherein the toothings of the toothed wheel (4, 4') and fitting plate (5, 5') which are each in engagement with one another are oriented axially offset relative to one another, **characterized in that** the wobble mechanism (1) is designed to be substantially symmetrical with respect to a centre plane (2), and the fitting plates (5, 5') are arranged inwardly offset with respect to the toothed wheels (4, 4') by an offset (v) in such a way that they experience a deformation in the direction of the centre plane (2) in the event of a loading in the region of the toothing.

2. Inclination adjuster according to Claim 1, having at least four interconnected, plate-like elements (E1, E2, E3, E4) which are oriented at least approximately parallel to one another, wherein in each case pairs of elements (E12, E23, E34) made up of elements bearing at least partially against one another are directly connected to one another, in particular welded, in the region where they bear, wherein in each case at least one element of each pair of elements has a bend (K, K') which creates a local, gap-like spacing (gap size s) from the other element of the same pair of elements, and the connection to the next element is obtained with the formation of a further pair of elements in the region of this spacing.

3. Inclination adjuster according to Claim 2, **characterized in that** the two outer pairs of elements (E12, E34) are designed mirror-symmetrically to one another and the mirror plane (centre plane 2) extends in the connection region of the central pair of elements (E23).

4. Inclination adjuster according to Claim 2 or 3, **characterized in that** the connection between the elements (E1 to E4) partially bearing against one another takes the form of a laser weld.

5. Inclination adjuster according to Claim 3 or 4, **characterized in that** the central pair of elements (E23) forms the first fitting part (3) to which outer elements (E1, E4) provided with toothings are connected.

6. Inclination adjuster according to Claim 5, **characterized in that** the outer elements (E1, E4) are designed as toothed wheels (4, 4') which are provided with external toothing and which can each be brought into engagement with a fitting plate (5, 5'), which is provided with an inner toothing, of the second fitting part.

## Revendications

1. Dispositif de réglage d'inclinaison pour siège de véhicule sous la forme d'un mécanisme oscillant (1) qui présente une première partie de ferrure (3) et une deuxième partie de ferrure d'angle ajustable par rapport à la première partie de ferrure (3), ainsi qu'au moins une roue dentée à denture extérieure (4, 4'), et au moins une plaque de ferrure à denture intérieure (5, 5'), les dentures de la roue dentée (4, 4') et de la plaque de ferrure (5, 5') en prise les unes avec les autres étant orientées de manière décalée axialement les unes par rapport aux autres, **caractérisé en ce que** le mécanisme oscillant (1) est réalisé de manière essentiellement symétrique par rapport à un plan médian (2) et les plaques de ferrure (5, 5') sont disposées de manière décalée vers l'intérieur par rapport aux roues dentées (4, 4') suivant un décalage (v), de telle sorte que lors d'une sollicitation dans la région de la denture, elles subissent une déformation dans la direction du plan médian (2).

2. Dispositif de réglage d'inclinaison selon la revendication 1, comprenant au moins quatre éléments en forme de plaque connectés les uns aux autres (E1, E2, E3, E4), qui sont orientés au moins approximativement parallèlement les uns aux autres, des paires d'éléments (E12, E23, E34) constituées d'éléments situés au moins en partie les uns contre les autres étant à chaque fois directement connectées ensemble, en particulier soudées, dans la région de leur appui, à chaque fois au moins un élément de chaque paire d'éléments présentant un coude local (K, K') créant un espacement de type fente (dimension de fente s) par rapport à l'autre élément de la même paire d'éléments et la connexion à l'élément suivant s'effectuant par formation d'une paire d'éléments supplémentaire dans la région de cet espacement.

3. Dispositif de réglage d'inclinaison selon la revendication 2, **caractérisé en ce que** les deux paires d'éléments extérieures (E12, E34) sont réalisées avec une symétrie spéculaire l'une par rapport à l'autre et le plan spéculaire (plan médian 2) s'étend dans la région de connexion de la paire d'éléments centrale (E23).

4. Dispositif de réglage d'inclinaison selon la revendication 2 ou 3, **caractérisé en ce que** la connexion entre les éléments situés en partie les uns contre les autres (E1 à E4) est réalisée sous forme de soudage laser.

5. Dispositif de réglage d'inclinaison selon la revendication 3 ou 4, **caractérisé en ce que** la paire d'éléments centrale (E23) constitue la première partie de ferrure (3) avec laquelle sont connectés des éléments extérieurs (E1, E4) pourvus de dentures.

6. Dispositif de réglage d'inclinaison selon la revendication 5, **caractérisé en ce que** les éléments extérieurs (E1, E4) sont réalisés sous forme de roues dentées (4, 4') pourvues de dentures extérieures qui peuvent être amenées à chaque fois en prise avec une plaque de ferrure (5, 5') de la deuxième partie de ferrure pourvue d'une denture intérieure.
